Europäisches Patentamt

European Patent Office

Office européen des brevets

(19)

(11) Numéro de publication : **0 349 368 B1**

(12)                    **FASCICULE DE BREVET EUROPEEN**

(45) Date de publication du fascicule du brevet :
**14.08.91 Bulletin 91/33**

(51) Int. Cl.⁵ : **F16D 65/16, F16D 65/84,**
**F16D 55/224, F16D 65/46,**
**F16D 65/56**

(21) Numéro de dépôt : **89401659.1**

(22) Date de dépôt : **14.06.89**

(54) **Frein à disque réglable.**

(30) Priorité : **27.06.88 FR 8808587**

(43) Date de publication de la demande :
**03.01.90 Bulletin 90/01**

(45) Mention de la délivrance du brevet :
**14.08.91 Bulletin 91/33**

(84) Etats contractants désignés :
**DE ES FR GB IT**

(56) Documents cités :
**EP-A- 0 186 537**
**FR-A- 1 396 588**
**FR-A- 2 300 937**
**FR-A- 2 347 573**
**FR-A- 2 371 605**
**FR-A- 2 504 224**

(56) Documents cités :
**FR-A- 2 516 189**
**FR-A- 2 594 508**
**FR-E- 91 830**
**GB-A- 1 198 952**
**US-A- 4 498 564**

(73) Titulaire : **BENDIX EUROPE Services**
**Techniques S.A.**
**126 rue de Stalingrad**
**F-93700 Drancy (FR)**

(72) Inventeur : **Fabbro, Edgard**
**BENDIX FRANCE 126 rue de Stalingrad**
**F-93700 Drancy (FR)**

(74) Mandataire : **Lejet, Christian**
**Bendix Europe Service Techniques Service**
**Brevets 126 rue de Stalingrad**
**F-93700 Drancy (FR)**

EP 0 349 368 B1

Jouve, 18, rue Saint-Denis, 75001 PARIS

## Description

La présente invention est relative à un frein à disque réglable notamment destiné à équiper les véhicules poids lourds.

Dans EP-A-0186537 est décrit un frein à disque comprenant un disque rotatif, un étrier monté sur un support fixe de façon à chevaucher le disque et à pouvoir se déplacer perpendiculairement au plan de ce dernier, et portant deux éléments de friction situés de part et d'autre du disque, un premier de ces éléments étant en appui sur l'étrier, et le second élément étant en appui, par l'intermédiaire d'une contreplaque rigide, sur un poussoir fileté, lui-même vissé dans une pièce montée sur l'étrier de façon à pouvoir coulisser perpendiculairement au plan du disque par rapport à l'étrier sous l'action du moyen moteur, tel qu'un vérin, le poussoir comportant une tête non circulaire, qui coopère avec un organe de retenue, de forme adaptée à cette tête, et qui empêche une rotation non désirée de la tête, et par conséquent, un vissage ou un dévissage du poussoir.

Selon ce document, la tête du poussoir est de forme hexagonale, et l'organe de retenue a la forme d'une fourche à deux dents qui viennent en contact avec deux faces opposées de la tête. La tige de l'organe de retenue est immobilisée par une vis montée dans la contreplaque du second élément de friction, et qui traverse un trou de la tige de l'organe de retenue. Lorsqu'on veut changer les éléments de friction, pour en mettre d'autres, d'épaisseur différente, par exemple à cause de l'usure, on enlève ladite vis, et l'organe de retenue peut être utilisé pour visser ou dévisser le poussoir, à la façon d'une clef plate Communément utilisée.

Cette disposition est utilisée en combinaison avec un dispositif de rattrapage automatique d'usure qui a pour effet de compenser les variations d'épaisseur des éléments de friction dues à l'usure.

Ce système donne dans l'ensemble satisfaction. Toutefois, on sait que, lors du freinage, les éléments de friction se meuvent légèrement dans le sens de la rotation du disque. L'organe de retenue, qui est fixé à une de ses extrémités à la contreplaque solidaire de l'un des éléments de friction, et à l'autre extrémité au poussoir, subit alors des efforts très importants tendant à le déformer gravement et à l'user prématurément.

La présente invention a donc pour but un frein à disque qui ne présente pas ces inconvénients, et qui, tout en étant d'un prix de revient faible, possède une plus grande durée de vie.

Pour atteindre ce but, selon l'invention, le frein comprend, en outre, une pièce d'arrêt solidaire de l'étrier, immobilisant en rotation l'organe de retenue, et un moyen d'entrainement en translation de l'organe de retenue avec la contreplaque, le moyen d'entrainement autorisant tout autre mouvement relatif de la contreplaque par rapport à l'organe de retenue.

Différents modes de réalisation font l'objet des sous-revendications. Parmi ceux-ci, on peut noter que la pièce d'arrêt peut favorablement être constituée par une tige rectiligne perpendiculaire au plan du disque, mais elle peut également être constitué par l'organe élastique de maintien des éléments de friction dans lequel une lumière allongée perpendiculairement au plan du disque a été pratiquée pour recevoir la queue de l'organe de retenue.

Le moyen d'entrainement en translation peut, par exemple, être constitué par un fil rigide plié ou par un ressort reliant l'organe de retenue et la contreplaque.

Ainsi, l'organe de retenue est immobilisé seulement en rotation, il peut coulisser perpendiculairement au plan du disque par rapport à l'étrier, et il suit le mouvement de translation de l'élément de friction et du poussoir, étant entendu qu'aucun autre mouvement de la contreplaque n'est transmis à l'organe de retenue.

L'invention sera mieux comprise et d'autres buts, avantages et caractéristiques de celle-ci apparaitront plus clairement à la lecture de la description qui suit d'exemples pratiques de réalisation donnés à titre non limitatif, et à laquelle trois planches de dessins sont jointes sur lesquelles :

— la Figure 1 représente, vu de dessus, un frein selon l'invention ;

— la Figure 2 est une vue de détail prise selon la flèche II de la Figure 1, montrant les relations entre l'organe de retenue, la tête du poussoir, et la contreplaque de l'élément de friction associé ;

— la Figure 3 est similaire à la Figure 2, mais illustre un autre mode d'exécution ;

— la Figure 4 représente, vu de dessus, le mode d'exécution illustré Figure 3 ;

— la Figure 5 est une vue partielle, selon la même direction que la Figure 1, et relative à un autre mode d'exécution de l'invention ;

— la Figure 6 est une coupe partielle selon la ligne VI de la Figure 5 ;

— la Figure 7 est une coupe partielle selon la ligne VII de la Figure 6.

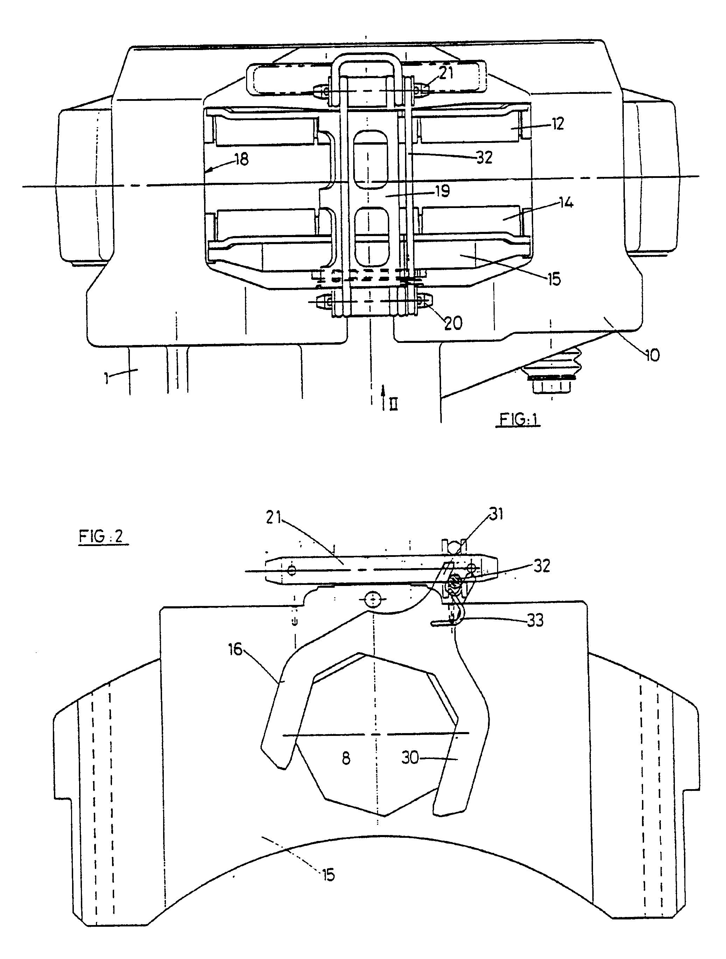

On n'a pas représenté ici le frein dans son ensemble car on le considère bien connu de l'homme du métier. Celui-ci pourra en trouver une description plus complète dans le document précité. En référence aux Figures 1 et 2, l'étrier 10 enjambe le disque de frein (non représenté) et porte sur la face opposée au corps 1 une première garniture de friction 12.

La tête 8 du poussoir agit sur une deuxième garniture de friction 14, par l'intermédiaire d'une contreplaque 15.

Un organe de retenue 16 empêche la rotation de la tête 8 sur son axe.

L'étrier présente, au-dessus du disque, un évidement 18, par lequel les garnitures 12, 14 peuvent être enlevées. Un ressort 19, en forme de lame, est placé en travers de l'évidement 18, de façon à être démontable et maintient les garnitures de freinage et la contreplaque 15 en place.

Ce ressort est maintenu en place sur l'étrier, d'un côté par une cheville démontable 20 et, de l'autre côté, par une cheville fixe 21. Par enlèvement de la cheville amovible 20, on peut faire basculer le ressort et démonter les garnitures.

La Figure 2 montre avec plus de précision la structure de l'organe de retenue 16. Cet organe 16 est une pièce plate, dont la forme présente une grande fourche 30, conçue pour enserrer la tête hexagonale 8, et une petite fourche extérieure 31, qui enserre une tige 32, perpendiculaire au plan du disque, parallèle à l'axe du poussoir, et solidaire de l'étrier 10. La tige 32 est fixée aux chevilles 20 et 21, et se trouve le long d'un des bords du ressort.

Les dimensions de la petite fourche 31 sont calculées pour que la pièce puisse coulisser le long de la tige 32 sans jeu, mais à frottement très doux.

Un fil rigide plié 33 formant moyen d'entrainement en translation, présente une branche qui vient en appui contre la face de l'organe de retenue 16 qui est à l'opposé de la contreplaque 15, et une autre branche, de l'autre coté de la fourche 31, qui est accrochée à ou vient en appui sur la face opposée de cette contreplaque, maintenant ainsi l'organe de retenue 16 plaquée contre cette contreplaque.

Ainsi, un éventuel mouvement de rotation de la contreplaque 15 n'est nullement transmis à l'organe de retenue 16.

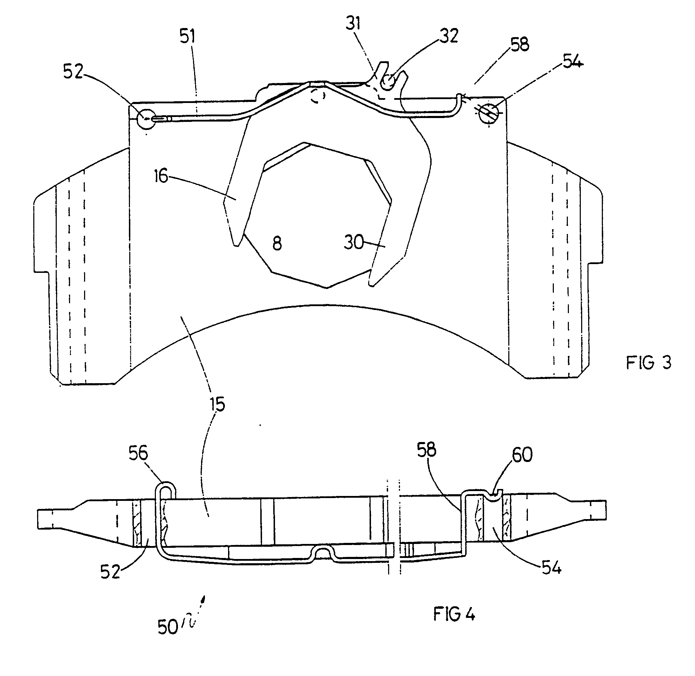

Les Figures 3 et 4 sont relatives à un autre mode de réalisation de l'invention. Le frein, dans son ensemble, est identique à celui des Figures 1 et 2. La différence essentielle entre le frein représenté Figures 3 et 4 et celui représenté Figure 2 réside dans la réalisation du moyen d'entrainement en translation de l'organe de retenue 16 avec la contreplaque 15. Dans l'exemple représenté ici, il s'agit d'un ressort 50.

Plus précisément, le ressort 50 présente deux extrémités 56 et 60 qui viennent en appui contre la face de la contreplaque 15 qui est opposée à l'organe de retenue et une partie centrale 51 de forme allongée, venant en appui sur la face de l'organe de retenue 16 qui est opposée à la contreplaque 15, de manière à ce que l'organe de retenue 16 reste au contact de la contreplaque 15. L'extrémité 56 de ce ressort traverse une ouverture 52 pratiquée dans la contreplaque 15, tandis que l'autre extrémité 58 chevauche la contreplaque et se termine par un élément 60 venant se clipser dans un évidement approprié. Ainsi réalisé, le moyen d'entrainement permet donc tout mouvement relatif entre la contreplaque et l'organe de retenue, sauf celui de translation.

En outre, ce ressort 50 exerce sur l'organe de retenue une force en direction de l'axe du disque, s'ajoutant à l'action du ressort 19 sur les éléments de friction.

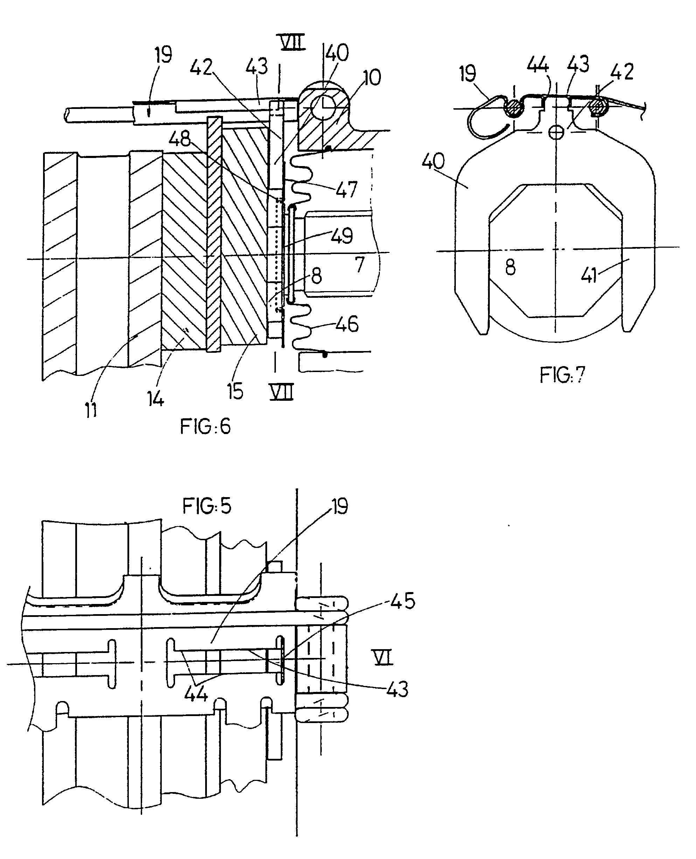

Les Figures 5 à 7 sont relatives à un autre mode d'exécution de l'invention.

Le frein, dans son ensemble, est identique à celui des Figures précédentes et les mêmes repères désignent les mêmes pièces. La différence se trouve essentiellement dans la forme de l'organe de retenue et dans le moyen d'entrainement en translation de l'organe de retenue avec la contreplaque.

L'organe de retenue 40, comme l'organe de retenue 16 des figures précédentes, est une pièce plate. Il présente d'un côté une grande fourche 41, qui enserre la tête 8 du poussoir, et du coté opposé, une queue 42, qui est guidée par des lumières 43 du ressort 19 de maintien des garnitures. De telles lumières sont visibles également sur le ressort 19 de la Figure 1, mais elles ont des bords rectilignes 44 comme représenté Figure 5. Par ailleurs, comme on peut le voir Figure 7, les bords 44 sont repliés vers le bas dans un plan perpendiculaire à celui du ressort 19. On comprendra que cette disposition a pour but d'assurer un guidage régulier de la queue 42, en évitant tout risque de coincement.

Le moyen d'entraînement en translation de l'organe de retenue avec la contreplaque 15 est bien visible Figure 6. Le poussoir 7 comporte, sous la tête 8, une rainure circulaire 48, dans laquelle est emmanché à force le bord interne replié d'une plaque 47 en forme de disque perforé. Une gorge 49 du poussoir 7, située à proximité de la tête, reçoit le bord interne d'un capuchon de protection 46. Le diamètre extérieur de la plaque 47 est tel qu'il déborde au-delà de la tête 8. L'organe de retenue 40 ne peut ainsi pas s'écarter de la contreplaque 5. Comme le poussoir, grâce au dispositif de réglage automatique, est toujours en contact avec la contreplaque 15, ou à faible distance de celle-ci, on voit que l'organe de retenue 40 ne peut pas s'échapper et est toujours en prise avec la tête 8.

On notera que le disque 47 joue un double rôle : d'une part il maintient l'organe de retenue 40 en place et, d'autre part, il constitue un moyen pour limiter l'échauffement du capuchon de protection 46 sous l'effet de la chaleur produite lors du freinage et transmise depuis la garniture de friction 14 et la contreplaque 15 en direction de la tête 8. Le capuchon de protection, en effet, est réalisé en une matière telle que du caoutchouc, qui craint les échauffements exagérés.

Il est à noter que le mode de maintien de l'organe de retenue qu'on vient de décrire en liaison avec la Figure 6 pourrait être associé avec un organe de retenue tel que décrit aux autres Figures, et réciproquement, rien ne s'oppose à ce que l'organe de retenue 40 des Figures 5 à 7 soit maintenu serré contre la contreplaque 15 par un ressort, tel que par exemple celui qui est représenté Figures 3 et 4 ou par un fil rigide plié tel que représenté Figure 2.

## Revendications

1. Frein à disque réglable, comprenant un disque rotatif, un étrier (10) chevauchant le disque, monté sur un support fixe de façon à pouvoir se déplacer perpendiculairement au plan du disque, et portant deux éléments de friction (12, 14) situés de part et d'autre du disque et dont le premier (12) est en appui sur l'étrier et le deuxième (14) est en appui, par l'intermédiaire d'une contreplaque rigide (15), sur un poussoir fileté, vissé lui-même dans une pièce montée de façon à constituer un dispositif de rattrapage automatique d'usure et présentant une tête (8) non circulaire qui coopère avec un organe de retenue (16, 40), de forme adaptée à cette tête, pour interdire toute rotation de ladite tête, caractérisé en ce qu'il comprend, en outre, une pièce d'arrêt (19, 32) solidaire de l'étrier, immobilisant en rotation ledit organe de retenue (16, 40), et un moyen d'entrainement en translation (33, 50, 47) dudit organe de retenue (16, 40) avec ladite contreplaque (15), ledit moyen d'entrainement autorisant tout autre mouvement relatif de la contreplaque par rapport au dit organe de retenue.

2. Frein à disque selon la revendication 1, caractérisé en ce que ladite pièce d'arrêt (32) est une tige rectiligne perpendiculaire au plan du disque.

3. Frein à disque selon la revendication 2, caractérisé en ce que ledit organe de retenue (16) présente un évidement (31) dans lequel s'engage ladite tige (32), l'organe de retenue (16) étant susceptible de coulisser sur ladite tige.

4. Frein à disque selon l'une quelconque des revendications 1 à 3, caractérisé en ce que ledit moyen d'entrainement en translation (33) est constitué par un fil rigide plié dont les extrémités sont respectivement solidarisées à l'organe de retenue et à ladite contreplaque en deux points situées sur des faces non en regard.

5. Frein à disque selon l'une quelconque des revendications 1 à 3, caractérisé en ce que ledit moyen d'entrainement en translation est un ressort (50) présentant deux extrémités (56, 60) en appui contre la face de la contreplaque (15) opposée audit organe de retenue (16) et une partie centrale allongée (50) en appui sur la face de l'organe de retenue (16) qui est à l'opposé de ladite contreplaque (15).

6. Frein à disque selon la revendication 5, caractérisé en ce que l'une (56) desdites extrémités dudit ressort (50) traverse ladite contreplaque (15), tandis que l'autre extrémité (58) chevauche ladite contreplaque (15).

7. Frein à disque selon la revendication 5 ou 6, caractérisé en ce que ledit ressort (50) exerce en outre sur ledit organe de retenue un force en direction dudit poussoir (7).

8. Frein selon la revendication 1, caractérisé en ce que l'organe de retenue (40) présente une queue ((42) qui pénètre dans une lumière (43) allongée perpendiculairement au plan du disque, prévue dans une pièce solidaire de l'étrier, cette pièce constituant la pièce d'arrêt.

9. Frein selon la revendication 8, caractérisé en ce que ladite pièce solidaire de l'étrier est un organe élastique (19) de maintien des éléments de friction.

10. Frein selon l'une quelconque des revendications 1 à 3, caractérisé en ce que ledit moyen d'entrainement est constitué par une plaque (47) montée à force sur le poussoir (7), l'organe de retenue (40) étant maintenu entre cette plaque (47) et la contreplaque (15).

11. Frein selon la revendication 10, caractérisé en ce que ladite plaque (47) est une plaque d'isolation thermique pour une pièce souple (46) de protection du poussoir (7).

12. Frein selon l'une des revendications 1 à 3, caractérisé en ce que le moyen d'entrainement est constitué par un épaulement du poussoir (7) l'organe de retenue étant maintenu entre cet épaulement et la contreplaque (15).

## Patentansprüche

1. Einstellbare Scheibenbremse, mit einer drehbaren Scheibe, einem die Scheibe übergreifenden Bremssattel (10), der an einem festen Träger so angebracht ist, daß er senkrecht zur Ebene der Scheibe verschiebbar ist, und der zwei Reibungselemente (12, 14) trägt, die auf beiden Seiten der Scheibe angeordnet sind, wobei die erste (12) sich am Bremssattel abstützt und die zweite (14) sich über eine dazwischen eingesetzte, starre Anschlagplatte (15) an einem mit einem Gewinde versehenen Stößel abstützt, der selbst mit einem Teil verschraubt ist, das so angebracht ist, daß es eine automatische Verschleißnachstellungsvorrichtung bildet und einen nicht kreisförmigen Kopf (8) aufweist, der mit einem Halteelement (16, 40), dessen Form an diesen Kopf angepaßt ist, zusammenwirkt, um jede Drehung des Kopfes zu verhindern, dadurch gekennzeichnet, daß sie außerdem ein einteilig mit dem Bremssattel ausgebildetes Arretierungsteil (19, 32), das die Drehung des Halteelements (16, 40) verhindert, und ein Mittel (33, 50, 47) zur Mitnahme des Halteelements (16, 40) in Verschiebungsrichtung aufweist, wobei das Mitnahmemittel jede andere Relativbewegung der Anschlagplatte in bezug auf das Halteelement zuläßt.

2. Scheibenbremse gemäß Anspruch 1, dadurch gekennzeichnet, daß das Arretierungsteil (32) ein senkrecht zur Ebene der Scheibe orientierter gerader Stift ist.

3. Scheibenbremse gemäß Anspruch 2, dadurch gekennzeichnet, daß das Haltemittel (16) eine Aussparung (31) aufweist, in die der Stift (32) eingreift, wobei das Haltemittel (16) auf dem Stift verschoben werden kann.

4. Scheibenbremse gemäß einem der Ansprüche 1 bis 3, dadurch gekennzeichnet, daß das Mittel (33) zur Mitnahme in Verschiebungsrichtung von einem gebogenen starren Draht gebildet wird, dessen Enden an zwei Punkten, die sich auf einander nicht gegenüberliegenden Seiten befinden, mit dem Halteelement bzw. mit der Anschlagplatte verbunden sind.

5. Scheibenbremse gemäß einem der Ansprüche 1 bis 3, dadurch gekennzeichnet, daß das Mittel zur Mitnahme in Verschiebungsrichtung eine Feder (50) ist, welche zwei Enden (56, 60), die sich gegen diejenige Seite der Anschlagplatte (15) abstützen, die dem Halteelement (16) abgewandt ist, und einen gestreckten Mittelteil (50) aufweist, der sich auf der Seite des Halteelements (16), die der Anschlagplatte (15) abgewandt ist, abstützt.

6. Scheibenbremse gemäß Anspruch 5, dadurch gekennzeichnet, daß eines (56) der zwei Enden der Feder (50) die Anschlagplatte (15) durchsetzt, während das andere Ende (58) die Anschlagplatte (15) übergreift.

7. Scheibenbremse gemäß Anspruch 5 oder 6, dadurch gekennzeichnet, daß die Feder (50) außerdem auf das Halteelement eine Kraft in Richtung des Stößels (7) ausübt.

8. Bremse gemäß Anspruch 1, dadurch gekennzeichnet, daß das Halteelement (40) ein Verankerungsende (42) aufweist, das in ein senkrecht zur Ebene der Scheibe sich erstreckendes Langloch (43) eindringt, welches in einem einteilig mit dem Bremssattel ausgebildeten Teil vorgesehen ist, das das Arretierungsteil bildet.

9. Bremse gemäß Anspruch 8, dadurch gekennzeichnet, daß das einteilig mit dem Bremssattel ausgebildete Teil ein elastisches Element (19) zum Halten der Reibungselemente ist.

10. Bremse gemäß einem der Ansprüche 1 bis 3, dadurch gekennzeichnet, daß das Mitnahmemittel von einer Platte (47) gebildet wird, die auf den Stößel (7) aufgepreßt ist, wobei das Halteelement (40) zwischen dieser Platte (47) und der Anschlagplatte (15) gehalten wird.

11. Bremse gemäß Anspruch 10, dadurch gekennzeichnet, daß diese Platte (47) für ein elastisches Teil (46) zum Schutz des Stößels (7) eine Wärmeisolationsplatte darstellt.

12. Bremse gemäß einem der Ansprüche 1 bis 3, dadurch gekennzeichnet, daß das Mitnahmemittel von einem Absatz des Stößels (7) gebildet wird, wobei das Halteelement zwischen diesem Absatz und der Anschlagplatte (15) gehalten wird.

## Claims

1. Adjustable disc brake comprising a rotary disc and a caliper (10) straddling the disc and mounted on a stationary support, so as to be capable of moving perpendicularly relative to the plane of the disc, and carrying two friction elements (12, 14) which are located on either side of the disc and of which the first (12) bears on the caliper and the second (14) bears, by means of a rigid counterplate (15), on a threaded pusher itself screwed into a piece mounted so as to constitute an automatic wear adjustment device and having a non-circular head (8) interacting with a retention member (16, 40) which is of a form matched to this head and which prevents any rotation of said head, characterised in that it comprises, furthermore, a stop piece (19, 32) fixed to the caliper and immobilising said retention member (16, 40) in terms of rotation, and a means (33, 50, 47) for driving said retention member (16, 40) in translational movement together with said counterplate (15), said driving means allowing any other relative movement of the counterplate in relation to said retention member.

2. Disc brake according to Claim 1, characterised in that said stop piece (32) is a straight rod perpendicular to the plane of the disc.

3. Disc brake according to Claim 2, characterised in that said retention member (16) has a recess (31), into which said rod (32) engages, the retention member (16) being capable of sliding on said rod.

4. Disc brake according to any of Claims 1 to 3, characterised in that said means for driving in translational movement (33) consists of a bent rigid wire, the ends of which are fixed respectively to the retention member and to said counterplate at two points located on faces not opposite one another.

5. Disc brake according to any of Claims 1 to 3, characterised in that said means for driving in translational movement is a spring (50) having two ends (56, 60) bearing against the face of the counterplate (15) opposite said retention member (16), and an elongate central part (50) bearing on the face of the retention member (16) which is opposite said counterplate (15).

6. Disc brake according to Claim 5, characterised in that one (56) of said ends of said spring (50) passes through said counterplate (15), whilst the other end (58) straddles said counterplate (15).

7. Disc brake according to Claim 5 or 6, characterised in that furthermore, said spring (50) exerts on said retention member a force in the direction of said pusher (7).

8. Brake according to Claim 1, characterised in that the retention member (40) has a tail (41) which enters a slot (43) elongate perpendicularly to the plane of the disc and made in a piece fixed to the caliper, this piece forming the stop piece.

9. Brake according to Claim 8, characterised in that the said piece fixed to the caliper is an elastic member (19) for keeping the friction elements in place.

10. Brake according to one of Claims 1 to 3, characterised in that said driving means consists of a plate (47) force-fitted on the pusher (7), the retention member (40) being held between this plate (47) and the counterplate (15).

11. Brake according to Claim 10, characterised in that said plate (47) is a heat insulation plate for a flexible piece (46) for protecting the pusher (7).

12. Brake according to one of Claims 1 to 3, characterised in that the driving means consists of a shoulder of the pusher (7), the retention member being held between this shoulder and the counterplate (15).

FIG:1

FIG:2

FIG 3

FIG 4

FIG:6

FIG:7

FIG:5